# EUROPEAN PATENT APPLICATION

(11) **EP 1 998 036 A2**
(43) Date of publication of application: **03.12.2008**
(21) Application number: 08251823.4
(22) Date of filing: 27.05.2008
(51) Int. Cl.: F02K 9/95

(54) **Resonance driven glow plug torch igniter and ignition method**

(30) Priority: 01.06.2007 US 756642
(71) Applicant: Pratt & Whitney Rocketdyne Inc., Canoga Park, CA 91309 (US)
(72) Inventor: Horn, Mark David, Granada Hills California, 91344 (US)
(74) Representative: Leckey, David Herbert

(57) **Abstract**

An ignition system (18) for a combustion device utilizes an oscillating pressure force in a resonance system (36) to generate thermal energy within a resonance driven glow plug (52). The resonance driven glow plug (52) stores the thermal energy for transfer to ignitable propellant combinations within a torch assembly (46) and thus within the combustion chamber.

## Description

### BACKGROUND OF THE INVENTION

The present invention relates to an igniter system for ignition of a rocket engine or other combustion device for propulsion, power, or industrial processing applications, and more particularly to a method which utilizes pressure energy to generate thermal energy which is transferred into a glow plug body to store the energy for transfer to ignitable propellant combinations in a torch assembly.

Various conventional ignition systems have been used for ignition of an ignitable propellant mixture in a combustion chamber of a rocket engine. Some ignition systems employ a spark induced by an electrical current. Other ignition systems employ glow plugs which are electrically heated. These conventional systems, although effective, tend to be relatively complex and heavy as each system requires electrical cabling, connectors, power, and control systems.

Accordingly, it is desirable to provide an uncomplicated, lightweight ignition system which is highly reliable, easy to integrate into complex assemblies, and readily extensible to multiple ignition point applications, such as in a baffled injector.

### SUMMARY OF THE INVENTION

A disclosed ignition system according to the present invention generally includes a resonance system in communication with a propellant or purge gas system to generate an oscillating pressure force. A resonance driven glow plug includes a gas resonance tube section in communication with the resonance system. Reflected shocks within the gas resonance tube section couple and reinforce detached shocks within the resonance cavity such that successive cycles of shocks cause the formation of a series of oscillating zones of elevated pressure within the gas resonance tube section that heats the gas within the resonance tube which then heats the walls of the gas resonance tube section. The resonance driven glow plug stores the thermal energy for transfer to ignitable propellant combinations within a torch assembly.

The present invention therefore provides an uncomplicated, lightweight ignition system that is highly reliable, easy to integrate into complex assemblies, and readily extensible to multiple ignition point applications, such as in a multicompartment combustor.

### BRIEF DESCRIPTION OF THE DRAWINGS

The various features and advantages of this invention will become apparent to those skilled in the art from the following detailed description of the currently preferred embodiment. The drawings that accompany the detailed description can be briefly described as follows:
Figure 1A is a general schematic view of an exemplary rocket engine embodiment for use with the present invention;
Figure 1B is a schematic view of an ignition system of the present invention;
Figure 1C is an expanded view of the igniter illustrated in Figure 1B;
Figure 2 is a schematic view of a notional start sequence;
Figure 3 is a schematic view of an ignition system illustrating factors driving temperature; and
Figure 4 is a schematic view of another igniter.

### DETAILED DESCRIPTION OF THE PREFERRED EMBODIMENT

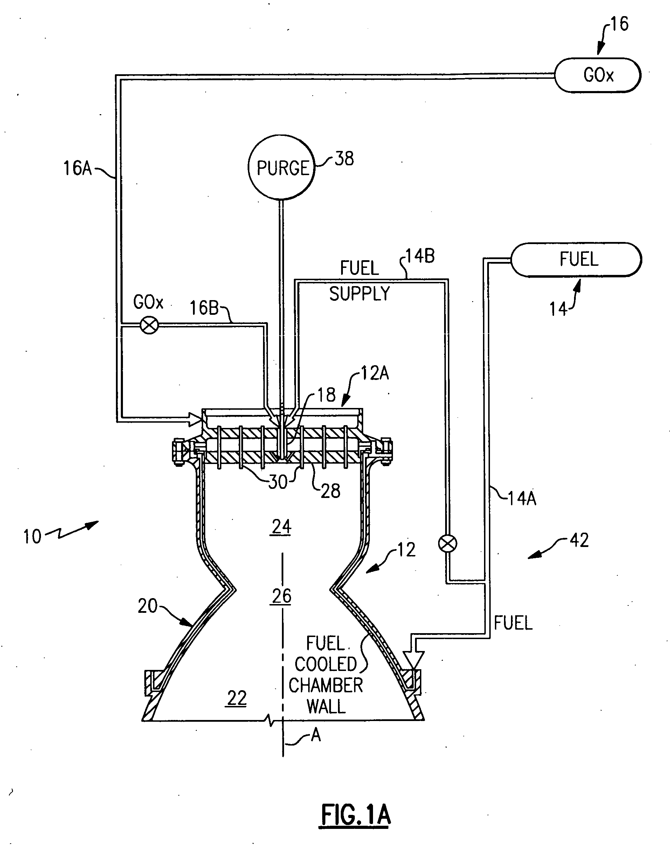

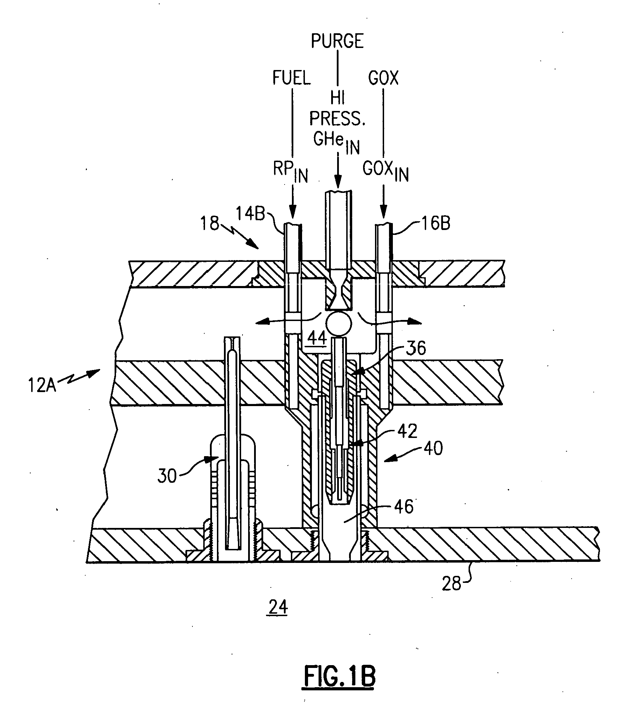

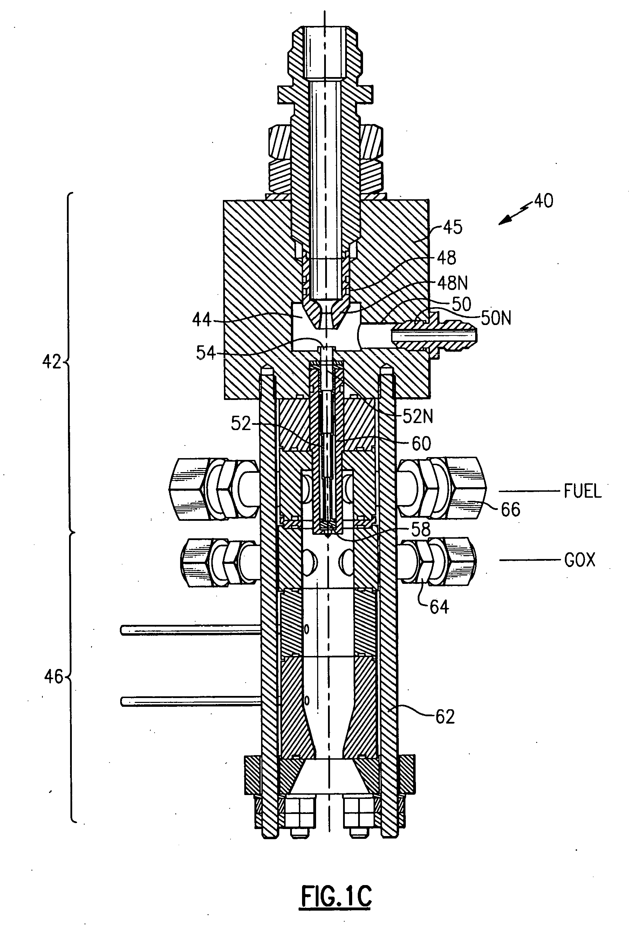

Figure 1 illustrates a general schematic view of a combustor 10. A rocket engine combustor is used in this example embodiment. The combustor 10 generally includes a combustion chamber assembly 12, a fuel system 14, an oxidizer system 16 and an ignition system 18. The fuel system 14 and the oxidizer system 16 provide a gaseous ignitable propellant combination to the combustor 10, however, other propellant systems such as liquid will also be usable.

The combustion chamber assembly 12 is defined by a fluid cooled wall 20 about a center axis A. The fluid cooled wall 20 defines a nozzle section 22, a combustion chamber section 24 upstream of the nozzle section 22, and a combustion chamber throat 26 therebetween. The combustion assembly 12 includes an injector system section 12A with an injector face 28 having a multitude of fuel/oxidizer injector elements 30 (shown somewhat schematically) which receive fuel which passes first through the fuel cooled combustion chamber wall 20 fed via fuel supply line 14a of the fuel system 14 and an oxidizer such as Gaseous Oxygen (GOx) through an oxidizer supply line 16a of the oxidizer system 16.

Referring to Figure 1B, the ignition system 18 generally includes a resonance system 36 in communication with one of the fuel system 14, the oxidizer system 16, or a purge gas system 38 to power an igniter 40. The igniter 40 is mounted within the injector section 12A to ignite the fuel/oxidizer ignitable propellant combination flow from the fuel/oxidizer injector elements 30. Ignition of the fuel/oxidizer ignitable propellant combination flow from the fuel/oxidizer injector elements 30 is provided by the igniter 40. It should also be understood that while the example embodiment of this invention is for rocket combustor ignition, application for power generation and ignition of other combustion based devices are equally suitable.

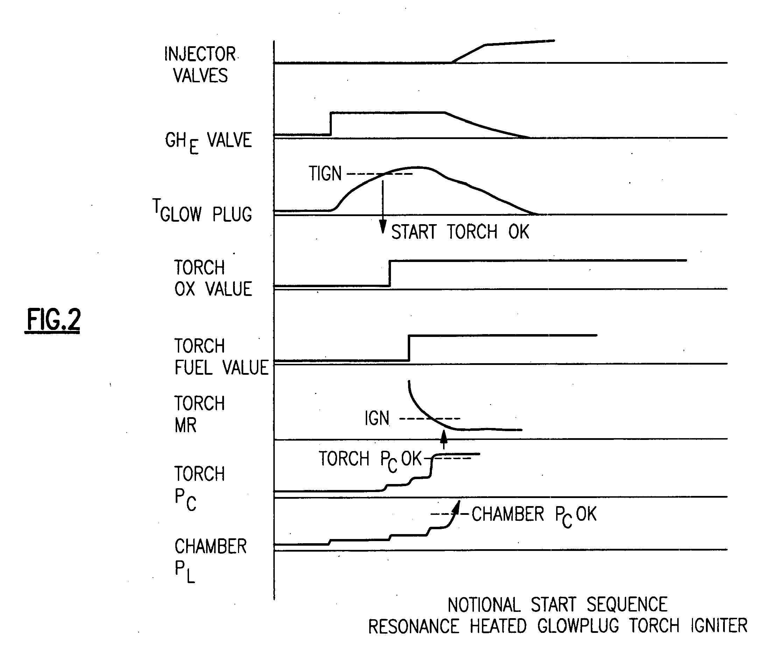

The oxidizer is fed to the igniter 40 via a dedicated line 16b in this embodiment, and the fuel is also fed to the igniter 40 via a dedicated line 14b. It should be understood that various propellant flow paths may also be usable. A purge gas such as helium from the purge gas system 38 may also be directed to the igniter 40 such that pressure energy within a resonance cavity 44 generates thermal energy for transfer into a resonance driven glow plug assembly 42. The resonance driven glow plug assembly 42 stores the thermal energy for transfer to ignitable propellant combinations within a torch assembly 46 (also illustrated in Figure 1C) and thus ignition within the combustion chamber 24. The purge gas, as illustrated in the disclosed embodiment, facilitates purging of the injector section 12A during a start sequence (Figure 2). It should be understood that although an inert purge gas is used as the resonance media in this application, propellants of the ignitable propellant combination, such as hydrogen, oxygen or methane, which may thereafter reintroduce into the propellant flow cycle for combustion, may alternatively be utilized to drive the igniter 40.

Referring to Figure 1C, the igniter 40 includes a housing 45 which defines the resonance cavity 44. An inlet 48 incorporates a sonic or supersonic inlet nozzle 48N to receive the resonance media (e.g., purge gas or propellant). An outlet 50 from the resonance cavity 44 includes an outlet nozzle 50N to maintain pressure in the resonance cavity 44 at a predetermined level. In a combustor, the resonance process, as disclosed in the illustrated embodiment, is driven by injector purge gas, using a resource already in the system to provide essentially "free" ignition. The resonance cavity 44 exhaust flow then dumps to the injector for injector purge. By utilizing an inert purge gas and completely isolating the combustion process from the resonance process, the ignition system 18 provides significant reliability.

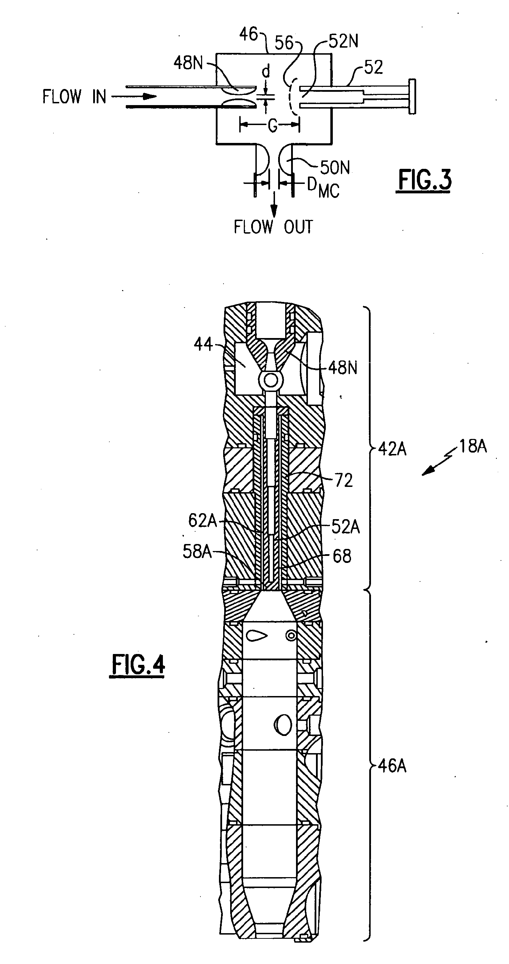

The resonance driven glow plug assembly 42 includes a resonance driven glow plug (RDGP) 52 in communication with an opening 54 in the resonance cavity 44 generally opposite the inlet nozzle 48N. The RDGP 52 generally includes a hollow member to receive flow. The gas flow entering the resonance cavity 44 through the inlet nozzle 48N as underexpanded flow is directed at the RDGP 52 to cause an oscillating detached shock 56 (Figure 3) to form upstream of the entrance 52N to the RDGP 52. Reflected shocks within the RDGP 52 couple and reinforce the detached shock 56 and interact with the flow within the resonance cavity 44 such that the successive cycles of shocks cause the formation of a series of oscillating zones of elevated pressure within the RDGP 52 that heats the gas within the resonance tube which then heats the walls of the RDGP 52.

Physical criteria for the interaction may be defined by: "d" the diameter of the supersonic inlet nozzle 48N; "G" the distance between the inlet nozzle 48N throat and the entrance 52N of the RDGP 52; "Dtube" the inner diameter of RDGP 52 and "DMC" which is the throat diameter of the outlet nozzle 50N. A stepped inner diameter RDGP 52 is depicted; however, it is understood that cylindrical, conical or other shaped resonance tube section may alternatively be utilized with the present invention.

The RDGP 52 is sealed at an end opposite the entrance 56N to form a resonance heated glow plug tip 58. The pressure energy within the RDGP 52 generates thermal energy within the resonance heated glow plug tip 58 which stores the thermal energy for transfer to the ignitable propellant combinations in the torch assembly 46. The RDGP 52 is manufactured of a high temperature material such as molybdenum, platinum or iridium and located within an insulator cylinder 60 manufactured of a ceramic or other high temperature insulator material. The RDGP 52 is spaced from the insulator cylinder 60 by an annular air gap 62 for at least a partial length thereof.

The torch assembly 46 includes a torch housing 62 arranged adjacent to the RDGP 52 to define at least one torch oxidizer inlet port 64 and at least one torch fuel inlet ports 66. Oxidizer is communicated from the oxidizer manifold (Figure 1B) through the at least one torch oxidizer inlet port 64 while fuel is communicated from the fuel manifold to the least one torch fuel inlet ports 66 adjacent the resonance heated glow plug tip 58. Oxidizer and fuel are injected adjacent the resonance heated glow plug tip 58 which is heated to temperatures upwards of 2000 degrees F (1093°C) to thereby ignite the ignitable propellant combination within the torch assembly 46. The resultant hot gas stream then exits the torch assembly and ignites the ignitable propellant combination within the combustion chamber 24.

The thermal energy is stored as thermal capacitance in the RDGP 52 which allows a relatively small energy generation source to provide adequate net energy for ignition as a higher temperature can be achieved for the same resonance flow parameters and then extracted at a higher rate for ignition of the propellants in the torch assembly 46. The resonance driven glow plug assembly 42 is uncomplicated, with no moving parts, no electrical cabling or connectors and no vehicle power or control requirements. These characteristics result in a system that is highly reliable, easy to integrate into complex assemblies, and readily extensible to multiple ignition point applications, such as in a baffled injector. Furthermore, the resonance driven glow plug assembly 42 is more resistant to contamination or damage and is relatively insensitive to the ignition pressure.

Referring to Figure 4, another ignition system 18A is illustrated. The resonance driven glow plug assembly 42A includes the stepped inner diameter RDGP 52 with a constant outer diameter 68 to form the resonance heated glow plug tip 58A. An air gap 62A also separates the RDGP 52 from an insulator 72 for at least a portion of the length thereof.

It should be understood that relative positional terms such as "forward," "aft," "upper," "lower," "above," "below," and the like are with reference to the normal operational attitude of the vehicle and should not be considered otherwise limiting.

It should be understood that although a particular component arrangement is disclosed in the illustrated embodiment, other arrangements will benefit from the instant invention.

Although particular step sequences are shown, described, and claimed, it should be understood that steps may be performed in any order, separated or combined unless otherwise indicated and will still benefit from the present invention.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. For that reason the following claims should be studied to determine the true scope and content of this invention.

## Claims

1. An ignition system (18) for a combustor comprising:
a resonance system (36); and
a resonance driven glow plug (52) heated by said resonance system (36).

2. The ignition system as recited in claim 1, wherein said resonance driven glow plug (52) includes a generally hollow member in communication with said resonance system (36).

3. The ignition system as recited in claim 2, further comprising a working fluid inlet (48) to said resonance system (36), said working fluid inlet (48) generally opposite a gas resonance tube section.

4. The ignition system as recited in claim 1, wherein said resonance driven glow plug (52) includes a stepped inner diameter.

5. The ignition system as recited in claim 4, wherein said resonance driven glow plug (52) includes a stepped outer diameter.

6. The ignition system as recited in claim 4, wherein said resonance driven glow plug (52) includes a constant diameter outer diameter.

7. The ignition system as recited in claim 4, 5 or 6 wherein said resonance driven glow plug (52) defines a resonance heated glow plug tip.

8. The ignition system as recited in any preceding claim, further comprising an insulator (60) separated from said resonance driven glow plug (52) by an annular air gap (62).

9. A combustor (10) comprising:
an injector system;
a resonance media in fluid communication with said injector system;
a resonance system (36) in communication with said resonance media; and
a resonance driven glow plug (52) heated by said resonance system (36) to ignite an ignitable propellant combination.

10. The combustor as recited in claim 9, wherein said resonance media is a gas, an inert pressurant, an oxidizer, or a fuel.

11. A method of igniting a combustion device comprising the steps of:
(A) communicating a resonance media to a resonance system (36) to generate a resonance;
(B) heating a resonance driven glow plug (52) with the resonance generated in said step (A); and
(C) igniting an ignitable propellant combination with the resonance driven glow plug (52).

12. A method as recited in claim 11, wherein said step (B) further comprises:
(a) causing an oscillating detached shock (56) to form upstream of an entrance to a gas resonance tube section of the resonance driven glow plug (52) such that successive cycles of shocks cause the formation of a series of oscillating zones of elevated pressure within the resonance driven glow plug (52) which heats the gas within the resonance tube which then heats the walls of the resonance driven glow plug (52).

13. A method as recited in claim 11 or 12, wherein said step (A) further comprises:
(a) communicating an inert pressurant as the resonance media.

14. A method as recited in claim 13, wherein said step (a) further comprises:
(a) exhausting the inert pressurant through an injector section as a purge.

15. A method as recited in claim 11 or 12, wherein said step (A) further comprises:
(a) communicating an ignitable propellant as the resonance media.

16. A method as recited in any of claims 11 to 15, wherein said step (C) further comprises:
igniting an ignition torch assembly (46).

17. A method as recited in any of claims 11 to 16, wherein said step (C) further comprises:
igniting a rocket engine.
